# EUROPÄISCHE PATENTSCHRIFT

(11) **EP 2 297 228 B1**
(45) Veröffentlichungstag und Bekanntmachung des Hinweises auf die Patenterteilung: **04.01.2012**
(21) Anmeldenummer: 09765919.7
(22) Anmeldetag: 19.06.2009
(51) Int. Cl.: C08G 69/46

(54) **KONTINUIERLICHES VERFAHREN ZUR MEHRSTUFIGEN TROCKNUNG UND NACHKONDENSATION VON POLYAMIDGRANULAT**
CONTINUOUS METHOD FOR MULTI-STAGED DRYING AND SUBSEQUENT CONDENSATION OF A POLYAMIDE GRANULATE
PROCÉDÉ CONTINU DE SÉCHAGE ET POST-CONDENSATION EN PLUSIEURS ÉTAPES D UN GRANULAT DE POLYAMIDE

(30) Priorität: 20.06.2008 EP 08158668
(43) Veröffentlichungstag der Anmeldung: 23.03.2011
(73) Patentinhaber: BASF SE, 67056 Ludwigshafen (DE)
(72) Erfinder: LOTH, Wolfgang, 67098 Bad Dürkheim (DE); EL-TOUFAILI, Faissal-Ali, 67063 Ludwigshafen (DE); STAMMER, Achim, 67251 Freinsheim (DE); KORY, Gad, 69251 Gaiberg (DE); GERSTLAUER, Achim, 67117 Limburgerhof (DE); BECKER, Jens, 67304 Eisenberg (DE)
(86) Internationale Anmeldenummer: PCT/EP2009/057673
(87) Internationale Veröffentlichungsnummer: WO 2009/153340

(56) Entgegenhaltungen:
- EP-A2- 0 732 351
- GB-A- 2 182 668

## Beschreibung

Die Erfindung betrifft ein kontinuierliches Verfahren zur mehrstufigen Trocknung und Nachkondensation von Polyamidgranulat in fester Phase mit dem Ziel, Polyamid 6 bzw. PA6 Co-polymere mit niedrigem Restmonomergehalt herzustellen.

Polyamide, insbesondere Polyamid-6, werden typischerweise nach der Polymerisation/Polykondensation granuliert, mit Wasser extrahiert, um verbleibende Monomere und Oligomere zu entfernen, und anschließend getrocknet. Optional kann nach der Extraktion zur Erhöhung des Molekulargewichts bzw. der Viskosität nachkondensiert werden. Hierbei wird die aus der Extraktion stammende Feuchtigkeit aus dem Polyamidgranulat entfernt. Hierzu sind unterschiedliche Verfahren bekannt.

EP-B-1 235 671 betrifft ein kontinuierliches Verfahren zur Trocknung und Nachkondensation von Granulat sowie eine Anlage zur Durchführung des Verfahrens. In dem Verfahren werden Trocknung und Nachkondensation entkoppelt, und die Trocknung wird in einem Kreuzstrom-Apparat durchgeführt. Das so vorgetrocknete Polyamid wird anschließend in einem Schachtapparat im Gegenstrom mit einem geringen Stickstoffstrom nachkondensiert.

Die EP-B-0 732 351 betrifft ein Verfahren und eine Vorrichtung zur Herstellung von Polyamiden, wobei durch Polykondensation in der Schmelze hergestelltes Polyamidgranulat in der festen Phase nachkondensiert wird. Dabei wird das Polyamidgranulat in einem ersten Schritt auf eine erste Temperatur zwischen 70°C und 150°C erwärmt, für zwei bis sechs Stunden bei dieser Temperatur gehalten und anschließend in einem zweiten Schritt bei einer höheren, aber unterhalb des Schmelzpunktes liegenden Temperatur, die zwischen 170°C und 10°C unterhalb des Schmelzpunktes liegt, aufgeheizt und bei dieser Temperatur nachkondensiert. Die Nachkondensation kann in einem Inertgasstrom durchgeführt werden. Bevorzugt wird die Nachkondensation in einem Wanderbett-Reaktor durchgeführt, dem Inertgas mit mindestens zwei unterschiedlichen Temperaturen an mindestens zwei unterschiedlichen Stellen zugeführt wird. Polyamid-6 wird beispielsweise zunächst bei einer Temperatur von 150°C nachkondensiert, sodann bei einer Temperatur von 190°C. Die Einleitung des Inertgases an zwei Stellen dient der Erzeugung der unterschiedlichen Temperaturen.

Aufgabe der vorliegenden Erfindung ist die Bereitstellung eines Verfahrens zur kontinuierlichen mehrstufigen Trocknung und Nachkondensation von Polyamidgranulat, das durch eine verbesserte Verfahrensführung zu Polyamidgranulat mit gewünschter Viskosität und gewünschten niedrigen Gehalten an Wasser und nicht extrahiertem Monomer und Oligomeren führt. Die Nachkondensation soll somit möglichst schonend erfolgen. Eine Kondensation von extrahiertem Monomer in Anlagenteilen, die zu einer Verstopfung der Anlage führen kann, soll vermieden werden.

Die Aufgabe wird erfindungsgemäß gelöst durch ein kontinuierliches Verfahren zur Vortrocknung und Nachkondensation von Polyamidgranulat in fester Phase, bei dem
1) die Vortrocknung in einem kontinuierlichen Trocknungsapparat (z.B. einem Schachttrockner, z. B. mit Wanderbett, Fließbetttrockner, Wirbel-/Pulsbetttrockner) durchgeführt wird, der im Gegenstrom oder im Kreuzstrom mit Inertgas, Wasserdampf oder einem Gemisch aus Inertgas und Wasserdampf bei einer Granulattemperatur im Bereich von 70 bis 200°C betrieben wird und
2) die nachfolgende kontinuierliche Nachkondensation in einem separaten Schacht mit Wanderbett bei einer Granulattemperatur, die über, gleich oder unter der Granulattemperatur in Stufe (1) liegen kann und im Bereich von 120 bis 210°C liegt, durchgeführt wird, wobei der Schacht im Gegenstrom mit Inertgas, Wasserdampf oder einem Gemisch aus Inertgas und Wasserdampf betrieben wird, das Inertgas an mindestens zwei Stellen entlang des Schachtes zugeführt wird, wobei 15 bis 90% des Inertgases am Boden des Schachtes und 10 bis 85% des Inertgases in der oberen Hälfte, vorzugsweise im oberen Drittel unterhalb der Granulatoberfläche zugeführt werden.

Es wurde erfindungsgemäß gefunden, dass Polyamid, insbesondere Polyamid-6 mit niedrigen Gehalten an Wasser und Monomeren bei gleichzeitig hohen Viskositäten zugänglich ist, wenn Vortrocknung und Nachkondensation apparativ voneinander getrennt werden und bei der Vortrocknung wie auch der Nachkondensation mit einem Inertgasstrom oder Wasserdampf oder einem Gemisch aus Inertgas und Wasserdampf gearbeitet wird, wobei bei der Nachkondensation der Inertgasstrom oder Wasserdampf oder das Gemisch aus Inertgas und Wasserdampf an mindestens zwei Stellen in den Schacht eingeführt wird. Im Gegensatz dazu werden gemäß der EP-B-0 732 351 Vortrocknung und Nachkondensation in einem einzigen Schachttrockner durchgeführt, und Inertgasströme werden nur an zwei Stellen in den Reaktor eingeführt, um unterschiedliche Temperaturprofile entlang des Schachtes einstellen zu können.

Gemäß EP-B-1 235 671 wird in der Nachkondensation nur ein geringer Stickstoffstrom im Gegenstrom eingesetzt. Ein Temperaturprofil zwischen Vortrocknung und Nachkondensation wird nicht erwähnt. Es wird angegeben, dass Trocknung als auch Nachkondensation auf sehr hohem Temperaturniveau betrieben werden.

Im erfindungsgemäßen Verfahren können beliebige Polyamidgranulate behandelt werden, beispielsweise von Polyamid-6, oder von anderen Polyamiden oder CoPolyamiden, die Restextrakt haben sowie von Gemischen aliphatischer und (teil-) aromatischer (Co-) Polyamide. Besonders bevorzugt wird Polyamid-6-Granulat oder Polyamid 6/66-Copolymer-Granulat eingesetzt.

Die Vortrocknung (Stufe 1) wird bei einer Granulattemperatur im Bereich von 70 bis 200°C, vorzugsweise 120 bis 180°C, insbesondere 140 bis 180°C durchgeführt.

Die Nachkondensation wird bei einer Granulattemperatur, die über, unter oder gleich der Granulattemperatur in Stufe (1) liegt oder ist, durchgeführt. Diese Granulattemperatur in Stufe (2) liegt im Bereich von 120 bis 210 °C vorzugsweise im Bereich von 160 bis 180 °C, insbesondere im Bereich von 165 bis 175 °C.

Die Temperatur in Stufe (2) wird in Abhängigkeit des gewünschten Molekulargewichts bzw. der gewünschten Viskosität des Polyamids und der Verweilzeit in den 2 Stufen gewählt. Für höhere Viskositäten bzw. höhere Molekulargewichte werden höhere Temperaturen eingesetzt.

Die Vortrocknung wird vorzugsweise bei einem Druck im Bereich von 1 bis 10 bar abs., insbesondere im Bereich von 1 bis 5 bar abs. durchgeführt. Die Nachkondensation wird vorzugsweise bei einem Druck im Bereich von 1 bis 10 bar abs., insbesondere im Bereich von 1 bis 5 bar abs. durchgeführt. Ein Überdruck wird in der Regel eingestellt, um das Eindringen von Luft (Sauerstoff) zu verhindern.

Erfindungsgemäß wird das Inertgas, Wasserdampf bzw. das Inertgas/Wasserdampfgemisch in Stufe (2) an mindestens zwei Stellen entlang des Schachtes zugeführt, wobei 15 bis 95% des Inertgases bzw. des Inertgas/Wasserdampfgemisches am Boden des Schachtes und 5 bis 85% des Inertgases bzw. des Inertgas/Wasserdampfgemisches im oberen Drittel unterhalb des Schachtkopfes zugeführt werden. Hierbei wandert das Granulat mittels Schwerkraft vom Schachtkopf zum Schachtboden und wird so im Gegenstrom mit Inertgas, Wasserdampf bzw. Inertgas/Wasserdampfgemisch behandelt.

Vorzugsweise werden in Stufe (2) 30 bis 90 % des Inertgases, Wasserdampfs bzw. des Inertgas/Wasserdampfgemisches, insbesondere 50 bis 85 % des Inertgases, Wasserdampfs bzw. des InertgasNVasserdampfgemisches am Boden des Schachtes und 10 bis 70 %, besonders bevorzugt 15 bis 50 % des Inertgases, Wasserdampfs oder Inertgas/Wasserdampfgemisches in der oberen Hälfte, z. B. im oberen Drittel oder im Bereich von 1/8 bis 3/8 der Schachtlänge unterhalb der Granulatoberfläche zugeführt. Wenn der Schacht vollständig gefüllt ist, sind Schachtkopf und Granulatoberfläche auf gleicher Höhe. In einer Ausführungsform erfolgt die Zuführung des Inertgases bzw. des Inertgas/Wasserdampfgemisches am Boden des Schachtes und auf etwa ¼ der Schachtlänge unterhalb des Granulat-Levels.

***Die Dimensionierung des Schachtes erfolgt bevorzugt so, dass an der Granulatoberfläche die Gasgeschwindigkeit den Wirbelpunkt nicht erreicht.***

Als Trocknungs- bzw. Extraktionsmedium können in den Stufen (1) und (2) beliebige geeignete Inertgase eingesetzt werden. Vorzugsweise werden in Stufe (1) Wasserdampf, Stickstoff oder Gemische davon als Trocknungsmedium und in Stufe (2) Stickstoff mit einem Wasserdampf-Anteil von 0 bis 90 Gew.-%, bevorzugt 0 bis 10 Gew.-% als Trocknungs- bzw. Extraktionsmedium eingesetzt. Vorzugsweise wird in Stufe 1 und 2 ein sauerstofffreies Trocknungs- bzw. Extraktionsmedium eingesetzt.

In Stufe (1) wird vorzugsweise 1 bis 20 kg Inertgas, Wasserdampf bzw. Inertgas/Wasserdampfgemisch, besonders bevorzugt 2 bis 10 kg Inertgas bzw. Inertgas/Wasserdampfgemisch pro kg Polyamid eingeführt.

In Stufe (2) werden vorzugsweise mindestens 0,5 kg Inertgas, Wasserdampf bzw. InertgasNVasserdampfgemisch pro kg Polyamid, besonders bevorzugt 1 bis 7 kg Inertgas bzw. Inertgas/Wasserdampfgemisch pro kg Polyamid in den Schacht eingeführt.

Das durch die Vortrocknung und durch die Nachkondensation jeweils geführte Inertgas bzw. Inertgas/Wasserdampfgemisch kann nach seinem Austritt verworfen werden. Vorzugsweise wird das Inertgas bzw. Inertgas/Wasserdampfgemisch nach einer Aufbereitung jedoch teilweise oder ganz ins Verfahren zurückgeführt.

Das in Stufe (1) den Apparat verlassende, beladene Trocknungsmedium wird vorzugsweise behandelt und teilweise oder ganz ins Verfahren zurückgeführt. Die Behandlung erfolgt durch Gaswäsche bei einer Temperatur unter 60 °C, vorzugsweise unterhalb von 45 °C. Um eine Aufpegelung von Verunreinigungen im Inertgas zu vermeiden, werden, wenn notwendig in Stufe (1) vorzugsweise 0,1 bis 10 Gew.-%, insbesondere etwa 1 Gew.-% des den Apparat verlassenden Trocknungsmediums durch frisches Medium ersetzt.

Das in Stufe (2) den Schacht am Kopf verlassende beladene Trocknungs- bzw. Extraktionsmedium wird vorzugsweise behandelt und teilweise oder ganz ins Verfahren zurückgeführt. Beispielsweise werden 0,1 bis 10 Gew.-% des den Schacht verlassenden Extraktionsmediums durch frisches Extraktionsmedium ersetzt. Die Behandlung erfolgt analog zu Stufe 1, z. B. durch Gaswäsche. Optional kann das beladene Trocknungs- bzw. Extraktionsmedium aus Stufe (2) zum Aufheizen/Trocknen in Stufe (1) eingesetzt werden.

In einer anderen Ausführungsform wird das Trocknungsmedium aus der Stufe 1 nach Behandlung in die Stufe 2 geführt.

Die Verweilzeit des Granulats in Stufe (1) beträgt vorzugsweise 0,2 bis 15 Stunden, besonders bevorzugt 0,5 bis 10 Stunden.

Die Verweilzeit in Stufe (2) beträgt vorzugsweise 5 bis 80 Stunden, insbesondere 20 bis 40 Stunden.

Das im Verfahren eingesetzte Polyamid bzw. Copolyamid kann durch beliebige geeignete Verfahren hergestellt werden. Hierbei kann beispielsweise auf die in EP-B-1 235 671, EP-B-0 732 351, EP-A-0 348 821, EP-A-0 702 047, EP-A-0 284 968 beschriebenen Verfahren verwiesen werden. Vorzugsweise wird das im Verfahren eingesetzte Polyamid-6-Granulat erhalten durch Reaktion von Caprolactam, optional Comonomeren, und Wasser in einem VK-Rohr mit oder ohne vorgeschaltetem DruckReaktor zu einem Präpolymeren. Anschließend erfolgen Granulierung und wässrige Extraktion des so erhaltenen Präpolymeren und Abtrennen von Wasser.

Die Trocknung und Nachkondensation kann apparativ beispielsweise wie in EP-B-1 235 671 beschrieben, ausgelegt und durchgeführt werden. Beispielsweise kann in Stufe (1) ein Kreuzstromtrockner eingesetzt werden. Alternativ kann in Stufe (1) auch ein Schachttrockner, Bandtrockner oder Wirbelbett eingesetzt werden.

In Stufe (2) wird vorzugsweise ein Schachttrockner eingesetzt. An den Schachttrockner kann sich ein Kühlapparat anschließen. Geeignete Geometrien der Vorrichtungen sind in der EP-B-1 235 671 in der Beschreibung und in den Zeichnungen aufgeführt.

Hierbei sei insbesondere auf die Verfahrensweise mit aktivem Schacht verwiesen, der einen zusätzlichen Inertgaskreislauf aufweist, siehe die Absätze [0032] bis [0037] der EP-B-1 235 671.

Eine realisierbare Feuchteabreicherung (Trocknung im Sinne der Erfindung) führt beim Polyamidgranulat in der Regel von einer Anfangsfeuchte von etwa 1 bis 15 Gew.-% auf Werte im Bereich von 0,02 bis 4 Gew-%.

Das aus der Extraktion kommende in der Vortrocknung eingesetzte Polyamid weist einen Gehalt an Restmonomeren im Bereich von größer 0 bis 0,08 Gew.-% auf. Vorzugsweise wird in den Vortrockner ein Polyamid eingebracht, in dem der Gehalt an Restmonomer weniger als 0,05 oder 0,03 Gew.-% und an cyclischem Restdimer weniger als 0,1 oder 0,08 Gew.-% beträgt. Gemäß einer Ausführungsform der Erfindung ist der Restmonomergehalt am Ausgang der Stufe 2 größer als am Eingang der Stufe 1.

Durch die Abtrennung von Monomeren und Dimeren in der Extraktion wird zuverlässig verhindert, dass sich Ablagerungen und Beläge auf den Apparaten bilden und letztendlich die Schächte und Brüdenleitung verstopft werden könnten.

In Stufe (2) wird ein separater Schacht oder Schachttrockner eingesetzt, den das Polyamid aufgrund der Schwerkraft in einem Wanderbett durchströmt. Über den Durchsatz und den Granulatstand im Schacht können unterschiedliche Verweilzeiten eingestellt und zusammen mit dem Einfluss unterschiedlicher Temperaturen Produkte unterschiedlichen Molekulargewichts hergestellt werden. Zweckmäßigerweise schließt man im Schachttrockner den Luftsauerstoff aus, da dieser mit dem heißen Polymergranulat reagiert, was bei dem Fertigprodukt zu so genannte Verfärbung führt.

Die Vorschaltung der Stufe 1 ist unter Anderem notwendig, um die Restfeuchte aus der Extraktion abzuführen, bevor das Granulat in den Schachttrockner (Stufe 2) gelangt. Andernfalls könnte durch die benötigte Verdampfungswärme die Gastemperatur bis unter die Kondensationstemperatur der Brüden abgesenkt werden, und das Granulat würde verkleben.

Die Entkopplung von Trocknung und Nachkondensation gestattet es, beide Verfahrensschritte auf individuell eingestellten Temperaturniveaus zu betreiben. Zudem kann die Granulatverweilzeit jeweils variabel eingestellt werden. Durch die Auslegung der Größe und durch den Füllgrad von Vortrockner und Nachkondensator kann erreicht werden, dass bei insgesamt gleichbleibendem Massenstrom unterschiedliche Verweilzeiten resultieren.

Es wird eine überraschend starke Reduzierung des Monomer-Aufbaues im Polyamidgranulat im Vergleich zum konventionellen Verfahren erreicht. Beispielsweise kann ein Polyamid-6 mit sehr niedrigem Caprolactam-Gehalt hergestellt werden, mit den entsprechenden anwendungstechnischen Vorteilen, insbesondere Reduzierung oder Vermeidung der Spinnrauch-Bildung bei der Faserherstellung, der Belagbildung auf Formteilen bei der Spritzguss-Verarbeitung oder dem Walzenbelag bei der Folienherstellung.

Das Verfahren wird nachstehend anhand von Beispielen näher erläutert.

### Beispiele

### Allgemeine Herstellungsweise

Ein Polyamid 6 Granulat hergestellt entsprechend der Vorschrift in DE-A-01545221 mit folgenden Eigenschaften wird eingesetzt:

**Tabelle der Eigenschaften des eingesetzten Produktes**

| **REG** [%] | **VZ** [ml/g] | **RF** [%] | **EG** (NH₂) [mmol/kg] | **Mono** [%] | **Mono** [**ppm**] |
|---|---|---|---|---|---|
| 0,27 | 137 | 11,2 | 54,1 | 0,010 | 100 |

| | | | | | |
|---|---|---|---|---|---|
| Abkürzungen: RF = Restfeuchte REG = Restextraktgehalt (Summe von Caprolactam und Oligomeren) VZ = Viskositätszahl EG = Endgruppengehalt (NH₂) Mono = Gehalt an Monomer | | | | | |

### Herstellung im Labormaßstab

Die Vortrocknung wurde im Labormaßstab in einem Trockenschrank mit Stickstoffspülung durchgeführt, in den das Granulat bei einem Stickstoffstrom von 200 l/h auf einen Teller gegeben wurde. Die Temperatur betrug 110°C, die Trocknungszeit war 7 Stunden. Es resultierte ein vorgetrocknetes Produkt mit folgenden Kennwerten:

**Tabelle der Eigenschaften des vorgetrockneten Produktes**

| **REG** [%] | **VZ** [ml/g] | **RF** [%] | **EG**(NH₂) [mmol/kg] | **Mono** [%] | **Mono** [**ppm**] |
|---|---|---|---|---|---|
| 0,32 | 152 | 2,85 | 51,6 | 0,010 | 100 |

Die Nachkondensation wurde im Labormaßstab wie folgt durchgeführt:
Es wurde ein Doppelmantelrohr mit einer Länge von 1000 mm eingesetzt, wobei frisches Polyamid-6-Granulat über eine beheizte Schleuse alle zwei Stunden nachgefüllt und am unteren Ende des Doppelmantelrohrs über eine regelbare Austragsschnecke diskontinuierlich ausgefahren wurde. Es wurde im Gegenstrom mit erhitztem Stickstoff bzw. einem Stickstoff/Wasserdampf-Gemisch gearbeitet, wobei das Inertgas unten in das Doppelmantelrohr und zusätzlich in der oberen Hälfte der Rohrlänge unterhalb des Kopfes eingeführt wurde. Die maximale Temperatur des Stickstoff-Wasserdampf-Gemisches betrug 180°C und der Maximaldruck betrug 1,4 bar.

Je nach gewünschter Verweilzeit wurde eine vorgegebene Granulatmenge in einer bestimmten Zeit über die Feststoffschleuse zugefahren und die entsprechende Menge über die Austragsschnecke zeitgleich wieder ausgefahren. Das Erhitzen des Granulates erfolgte über den Inertgasstrom. Ab einer Granulattemperatur von 140°C wurde gegebenenfalls die gewünschte Wassermenge in den Stickstoffstrom zugefahren.

Der Inertgasstrom wurde geteilt, und 33-85 % des Inertgases (Stickstoff) wurden am Boden und 15-67 % des Inertgases in der oberen Hälfte bzw. in dem oberen Drittel zugefahren.

Die Restfeuchte der Polyamid-Proben wurde in einer Apparatur nach Karl-Fischer bestimmt.

Die Polyamid-Probe wurde zur Bestimmung der Viskositätszahl (VZ) 0,5%-ig (m/V) in 96 ± 0,1 %-iger Schwefelsäure gelöst. In einem Ubbelohde-Viskosimeter wurden die Durchlaufzeiten der Probelösung und des Lösungsmittels bei 25,0 ± 0,05°C Wasserbadtemperatur bestimmt, und daraus wurde die Viskositätszahl bzw. die relative Viskosität berechnet.

Der Rest-Monomer- bzw. Extraktgehalt wurde chromatographisch bestimmt. Der Endgruppengehalt wurde titrimetrisch bestimmt.

### Beispiel 1:

Das Granulat wurde bei 165 °C getempert. Der Granulatstrom war 180g/h und 0,2 Nm³/h Stickstoff mit 6 % Feuchte wurden am Turmboden eingespeist. In der Turmmitte wurden 0,4 Nm³/h Stickstoff mit 6 % Feuchte eingespeist.

Es resultierten folgende Eigenschaften:

**Tabelle der Eigenschaften des getemperten Produktes**

| | | | | | | |
|---|---|---|---|---|---|---|
| **Zeit [h]** | **REG** [%] | **VZ** [ml/g] | **RF** [%] | **EG** (NH₂) [mmol/kg] | **Mono** [%] | **Mono** [**ppm**] |
| 5,5 | 0,30 | 168 | 0,725 | 48,8 | 0,060 | 600 |
| 16 | 0,32 | 201 | 0,024 | 40,0 | 0,14 | 1400 |
| 20 | 0,33 | 208 | 0,02 | 38,6 | 0,15 | 1500 |
| 25 | 0,33 | 221 | 0,164 | 36,2 | 0,150 | 1500 |

| | | | | | | |
|---|---|---|---|---|---|---|
| **Abkürzungen:** RF = Restfeuchte REG = Restextraktgehalt (Summe von Caprolactam und Oligomeren) VZ = Viskositätszahl EG = Endgruppengehalt (NH₂) Mono = Gehalt an Monomer | | | | | | |

Es zeigt sich, dass ein Produkt mit mittlerer Viskositätszahl und Restmonomergehalten kleiner/gleich 1500 ppm erreicht werden kann.

Beispiel 2:

Das Granulat wurde bei 165 °C getempert. Der Granulatstrom war 180g/h und 0,2 Nm³/h trockener Stickstoff wurden am Turmboden eingespeist. In der Turmmitte wurden 0,4 Nm³/h trockener Stickstoff eingespeist.

Es resultierten folgende Eigenschaften:

**Tabelle der Eigenschaften des getemperten Produktes**

| **Zeit [h]** | **REG** [%] | **VZ** [ml/g] | **RF** [%] | **EG** (NH₂) [mmol/kg] | **Mono** [%] | **Mono** [**ppm**] |
|---|---|---|---|---|---|---|
| 26 | 0,29 | 233 | 0,01 | 37,8 | 0,120 | 1200 |

Es zeigt sich, dass ein Produkt mit mittlerer Viskositätszahl und 1200 ppm Restmonomer erreicht werden kann.

### Beispiel 3:

Das Granulat wurde bei 173 °C getempert. Der Granulatstrom war 180g/h und 0,2 Nm³/h trockener Stickstoff wurden am Turmboden eingespeist. In der Turmmitte wurden 0,3 Nm³/h trockener Stickstoff eingespeist.

Es resultierten folgende Eigenschaften:

**Tabelle der Eigenschaften des getemperten Produktes**

| **Zeit [h]** | **REG** [%] | **VZ** [ml/g] | **RF** [%] | **EG** (NH₂) [mmol/kg] | **Mono** [%] | **Mono [ppm]** |
|---|---|---|---|---|---|---|
| 7 | 0,30 | 187 | 0,01 | 44,3 | 0,11 | 1100 |
| 14 | 0,31 | 212 | 0,010 | 41,3 | 0,14 | 1400 |
| 26 | 0,31 | 253 | 0,010 | 35,8 | 0,12 | 1200 |

Es zeigt sich, dass ein Produkt mit hoher Viskositätszahl und einem Restmonomergehalt kleiner 1500 ppm erreicht werden kann.

Beispiel 4:

### Das Granulat wurde bei 165 °C getempert. Der Granulatstrom war 180g/h und 0,2 Nm³/h Stickstoff mit 1,3 % Feuchte wurden am Turmboden eingespeist. In der Turmmitte wurden 0,4 Nm³/h Stickstoff mit 1,3 % Feuchte eingespeist.

Es resultierten folgende Eigenschaften:

**Tabelle der Eigenschaften des getemperten Produktes**

| **Zeit [h]** | **REG** [%] | **VZ** [ml/g] | **RF** [%] | **EG** (NH₂) [mmol/kg] | **Mono** [%] | **Mono [ppm]** |
|---|---|---|---|---|---|---|
| 5,5 | 0,28 | 179 | 0,018 | 45,5 | 0,090 | 900 |
| 9 | 0,30 | 193 | 0,018 | 42,9 | 0,12 | 1200 |
| 25 | 0,32 | 231 | 0,02 | 36,0 | 0,130 | 1300 |

Es zeigt sich, dass ein Produkt mit mittlerer Viskositätszahl und einem Restmonomergehalt kleiner 1400 ppm erreicht werden kann.

### Vergleichsbeispiele ohne Vortrocknung

Zum Vergleich mit dem neuen Prozess wurde ungetrocknetes Polyamidgranulat mit folgenden Eigenschaften getempert:

**Tabelle der Eigenschaften des eingesetzten Produktes**

| **REG** [%] | **VZ** [ml/g] | **RF** [%] | **EG** (NH₂) [mmol/kg] | **Mono** [%] | **Mono [ppm]** |
|---|---|---|---|---|---|
| 0,27 | 137 | 11,2 | 54,1 | 0,010 | 100 |

### Beispiel 5 (Vergleich):

Das Granulat wurde bei 173 °C getempert. Der Granulatstrom betrug 200g/h und 1,7 Nm³/h Stickstoff mit 3,8 % Feuchte wurden an einer Stelle in dem Turm auf etwa ¼ der Turmlänge unterhalb des Turmkopfes eingeführt.

Es resultierten folgende Eigenschaften:

**Tabelle der Eigenschaften des getemperten Produktes**

| **Zeit [h]** | **REG** [%] | **VZ** [ml/g] | **RF** [%] | **EG (NH2)** [mmol/kg] | **Mono** [%] | **Mono [ppm]** |
|---|---|---|---|---|---|---|
| 27 | 0,61 | 230 | 0,19 | 34,2 | 0,43 | 4300 |

Es zeigt sich, dass im Vergleich zum erfindungsgemäßen Prozess (näherungsweise Beispiel 3) ein Produkt mit niedrigerer Viskositätszahl und deutlich höherem Restmonomergehalt erhalten wird.

### Beispiel 6C (Vergleich):

Das Granulat wurde bei 165 °C getempert. Der Granulatstrom war 200g/h und 1,7 Nm³/h Stickstoff mit 3,8 % Feuchte wurden an einer Stelle in dem Turm auf etwa ¼ der Turmlänge unterhalb des Turmkopfes eingeführt.

Es resultierten folgende Eigenschaften:

**Tabelle der Eigenschaften des getemperten Produktes**

| **Zeit [h]** | **REG** [%] | **VZ** [ml/g] | **RF** [%] | **EG** (NH₂) [mmol/kg] | **Mono** [%] | **Mono [ppm]** |
|---|---|---|---|---|---|---|
| 27 | 0,49 | 210 | 0,43 | 37,1 | 0,33 | 3300 |

Es zeigt sich, dass im Vergleich zum erfindungsgemäßen Prozess (näherungsweise Beispiel 4) ein Produkt mit niedrigerer Viskositätszahl und höherem Restmonomergehalt erreicht wird.

## Patentansprüche

1. Kontinuierliches Verfahren zur mehrstufigen Trocknung und Nachkondensation von Polyamidgranulat in fester Phase, **dadurch gekennzeichnet, dass**
1) die Vortrocknung in einem kontinuierlichen Trocknungsapparat durchgeführt wird, der im Gegenstrom oder im Kreuzstrom mit Inertgas, Wasserdampf oder einem Gemisch aus Inertgas und Wasserdampf bei einer Granulattemperatur im Bereich von 70 bis 200°C betrieben wird und
2) die nachfolgende kontinuierliche Nachkondensation in einem separaten Schacht mit Wanderbett bei einer Granulattemperatur, die im Bereich von 120 bis 210°C liegt, durchgeführt wird, wobei der Schacht im Gegenstrom mit Inertgas, Wasserdampf oder einem Gemisch aus Inertgas und Wasserdampf betrieben wird, das Inertgas an mindestens zwei Stellen entlang des Schachtes zugeführt wird, wobei 15 bis 90% des Inertgases am Boden des Schachtes und 10 bis 85% des Inertgases in der oberen Hälfte unterhalb der Granulatoberfläche zugeführt werden.

2. Verfahren nach Anspruch 1, **dadurch gekennzeichnet, dass** das Polyamidgranulat ein Polyamid-6-Granulat bzw. ein Polyamid 6 / 66-Copolymer-Granulat ist.

3. Verfahren nach Anspruch 2, **dadurch gekennzeichnet, dass** das im Verfahren eingesetzte Polyamid-6-Granulat erhalten wird durch Umsetzung von Caprolactam und Wasser, optional mit Comonomeren in einem VK-Rohr mit oder ohne vorgeschaltetem Druckreaktor zu einem Präpolymeren, Granulierung und wässrige Extraktion des so erhaltenen Präpolymeren und nachfolgendes Abtrennen von Wasser.

4. Verfahren nach einem der Ansprüche 1 bis 3, **dadurch gekennzeichnet, dass** die Vortrocknung bei einer Granulattemperatur im Bereich von 120 bis 180°C durchgeführt wird.

5. Verfahren nach einem der Ansprüche 1 bis 4, **dadurch gekennzeichnet, dass** die Nachkondensation bei einer Granulattemperatur im Bereich von 160 bis 180°C durchgeführt wird.

6. Verfahren nach einem der Ansprüche 1 bis 5, **dadurch gekennzeichnet, dass** in Stufe (2) 50 bis 85% des Inertgases im Boden des Schachtes und 15 bis 50% des Inertgases im Bereich von 1/8 bis 3/8 der Schachtlänge unterhalb der Granulatoberfläche zugeführt werden.

7. Verfahren nach einem der Ansprüche 1 bis 6, **dadurch gekennzeichnet, dass** in Stufe (1) Wasserdampf, Stickstoff oder Gemische davon als Trocknungsmedium und in Stufe (2) Stickstoff mit einem Wasserdampf-Anteil von 0 bis 90 Gew.-% als Extraktionsmedium eingesetzt werden.

8. Verfahren nach Anspruch 7, **dadurch gekennzeichnet, dass** in Stufe (2) das den Schacht verlassende Extraktionsmedium einer Gaswäsche bei einer Temperatur unterhalb von 60°C unterzogen und dann ins Verfahren zurückgeführt wird.

9. Verfahren nach einem der Ansprüche 1 bis 8, **dadurch gekennzeichnet, dass** in Stufe (2) 0,1 bis 10 Gew.-% des den Schacht verlassenden Extraktionsmedium durch frisches Extraktionsmedium ersetzt werden und der verbleibende Teil des Extraktionsmediums nach einer Gaswäsche ins Verfahren zurückgeführt wird.

10. Verfahren nach einem der Ansprüche 1 bis 9, **dadurch gekennzeichnet, dass** in Stufe (2) mindestens 0,5 kg Inertgas pro kg Polyamid in den Schacht eingeführt werden.

11. Verfahren nach einem der Ansprüche 1 bis 10, **dadurch gekennzeichnet, dass** Stufe (1) in einem Schachttrockner, Fließbetttrockner oder Wirbel-/Pulsbetttrockner durchgeführt wird.

## Claims

1. A continuous process for the multistage drying and postcondensation of polyamide pellets in the solid phase, which comprises
1) carrying out the predrying process in a continuous drying apparatus which is operated in countercurrent mode or in crossflow mode with inert gas or steam, or with a mixture of inert gas and steam, using a pellet temperature in the range from 70 to 200°C, and
2) the subsequent continuous postcondensation process is carried out in a separate vertical duct with moving bed at a pellet temperature in the range from 120 to 210°C, where the duct is operated in countercurrent mode with inert gas or steam, or with a mixture of inert gas and steam, the inert gas is introduced at at least two sites along the duct, and from 15 to 90% of the inert gas is introduced at the base of the vertical duct and from 10 to 85% of the inert gas is introduced in the upper half below the surface of the pellets.

2. The process according to claim 1, wherein the nylon pellets are nylon-6 pellets or nylon-6/6,6 copolymer pellets.

3. The process as claimed in claim 2, wherein the nylon-6 pellets used in the process are obtained through reaction of caprolactam and water, optionally with comonomers, in a precondensation tube with or without upstream pressure reactor, to give a prepolymer, pelletization and aqueous extraction of the resultant prepolymer, and subsequent removal of water.

4. The process according to any of claims 1 to 3, wherein the predrying process is carried out at a pellet temperature in the range from 120 to 180°C.

5. The process according to any of claims 1 to 4, wherein the postcondensation is carried out at a pellet temperature in the range from 160 to 180°C.

6. The process according to any of claims 1 to 5, wherein, in stage (2), from 50 to 85% of the inert gas is introduced within the base of the vertical duct and from 15 to 50% of the inert gas is introduced in the region from 1/8 to 3/8 of the vertical duct length below the surface of the pellets.

7. The process according to any of claims 1 to 6, wherein, in stage (1), steam, nitrogen, or a mixture thereof is used as desiccant, and, in stage (2), nitrogen with steam content of from 0 to 90% by weight is used as extractant.

8. The process according to claim 7, wherein, in stage (2), the extractant leaving the vertical duct is subjected to scrubbing at a temperature below 60°C and then returned to the process.

9. The process according to any of claims 1 to 8, wherein, in stage (2), from 0.1 to 10% by weight of the extractant leaving the vertical duct is replaced by fresh extractant and the remaining part of the extractant is returned, after scrubbing, to the process.

10. The process according to any of claims 1 to 9, wherein, in stage (2), at least 0.5 kg of inert gas per kg of polyamide is introduced into the vertical duct.

11. The process as claimed in any of claims 1 to 10, wherein stage (1) is carried out in a tower dryer, fluidized-bed dryer, or fluidized/pulsed-bed dryer.

## Revendications

1. Procédé continu pour le séchage et la post-condensation en plusieurs étapes d'un granulat de polyamide en phase solide, **caractérisé en ce que**
1) le pré-séchage est réalisé dans un appareil de séchage continu, qui est actionné à contre-courant ou en courant transversal avec un gaz inerte, de la vapeur d'eau ou un mélange de gaz inerte et de vapeur d'eau à une température de granulat dans la plage allant de 70 à 200 °C, et
2) la post-condensation continue ultérieure est réalisée dans un puits séparé muni d'un lit mobile à une température de granulat située dans la plage allant de 120 à 210 °C, le puits étant actionné à contre-courant avec un gaz inerte, de la vapeur d'eau ou un mélange de gaz inerte et de vapeur d'eau, le gaz inerte étant introduit à au moins deux emplacements le long du puits, 15 à 90 % du gaz inerte étant introduit au fond du puits et 10 à 85 % du gaz inerte étant introduit dans la moitié supérieure en dessous de la surface du granulat.

2. Procédé selon la revendication 1, **caractérisé en ce que** le granulat de polyamide est un granulat de polyamide 6 ou un granulat d'un copolymère de polyamide 6/66.

3. Procédé selon la revendication 2, **caractérisé en ce que** le granulat de polyamide 6 utilisé dans le procédé est obtenu par mise en réaction de caprolactame et d'eau, éventuellement avec des comonomères, dans un tube VK avec ou sans réacteur sous pression an amont, pour former un prépolymère, granulation et extraction aqueuse du prépolymère ainsi obtenu et séparation ultérieure de l'eau.

4. Procédé selon l'une quelconque des revendications 1 à 3, **caractérisé en ce que** le pré-séchage est réalisé à une température de granulat dans la plage allant de 120 à 180 °C.

5. Procédé selon l'une quelconque des revendications 1 à 4, **caractérisé en ce que** la post-condensation est réalisée à une température de granulat dans la plage allant de 160 à 180 °C.

6. Procédé selon l'une quelconque des revendications 1 à 5, **caractérisé en ce qu'**à l'étape (2), 50 à 85 % du gaz inerte est introduit au fond du puits et 15 à 50 % du gaz inerte est introduit dans la zone allant de 1/8 à 3/8 de la longueur du puits en dessous de la surface du granulat.

7. Procédé selon l'une quelconque des revendications 1 à 6, **caractérisé en ce qu'**à l'étape (1), de la vapeur d'eau, de l'azote ou leurs mélanges sont utilisés en tant que milieu de séchage et, à l'étape (2), de l'azote ayant une proportion de vapeur d'eau de 0 à 90 % en poids est utilisé en tant que milieu d'extraction.

8. Procédé selon la revendication 7, **caractérisé en ce qu'**à l'étape (2), le milieu d'extraction quittant le puits est soumis à une épuration gazeuse à une température inférieure à 60 °C, puis recyclé dans le procédé.

9. Procédé selon l'une quelconque des revendications 1 à 8, **caractérisé en ce qu'**à l'étape (2), 0,1 à 10 % en poids du milieu d'extraction quittant le puits est remplacé par du milieu d'extraction frais et la partie restante du milieu d'extraction est recyclée dans le procédé après une épuration gazeuse.

10. Procédé selon l'une quelconque des revendications 1 à 9, **caractérisé en ce qu'**à l'étape (2), au moins 0,5 kg de gaz inerte par kg de polyamide est introduit dans le puits.

11. Procédé selon l'une quelconque des revendications 1 à 10, **caractérisé en ce que** l'étape (1) est réalisée dans un séchoir à puits, un séchoir à lit fluidisé ou un séchoir à lit mobile/pulsé.
